# EUROPÄISCHE PATENTANMELDUNG

(11) **EP 1 916 146 A2**
(43) Veröffentlichungstag der Anmeldung: **30.04.2008**
(21) Anmeldenummer: 07020176.9
(22) Anmeldetag: 16.10.2007
(51) Int. Cl.: B60K 17/02, B60K 6/387

(54) **Hybrid-Antriebssystem für ein Fahrzeug**

(30) Priorität: 28.10.2006 DE 102006050911; 22.11.2006 DE 102006054989; 19.09.2007 DE 102007044621
(71) Anmelder: ZF FRIEDRICHSHAFEN AG, 88038 Friedrichshafen (DE)
(72) Erfinder: Orlamünder, Andreas, 97453 Schonungen (DE); Hoffelner, Ingrid, 97478 Knetzgau (DE); Dögel, Thomas, 97688 Bad Kissingen (DE)

(57) **Zusammenfassung**

Ein Hybrid-Antriebssystem für ein Fahrzeug umfasst eine Brennkraftmaschine (12) mit einer Kurbelwelle (14), eine erste Reibungskupplungsanordnung (22), axial folgend auf die Brennkraftmaschine (12), wobei ein Eingangsbereich (32) der ersten Reibungskupplungsanordnung (22) mit der Kurbelwelle (14) über eine Kopplungsanordnung (24) zur gemeinsamen Drehung um eine Drehachse (A) verbunden ist und wobei eine Kupplungsscheibenanordnung (40,42) der ersten Reibungskupplungsanordnung (22) mit einer Zwischenwelle (50) zur gemeinsamen Drehung um die Drehachse (A) verbunden ist, eine bezüglich einer feststehenden Baugruppe getragene Zwischenabstützanordnung (58), an welcher die Zwischenwelle (50) gelagert ist, eine Betätigungsanordnung (62) zur Betätigung der ersten Reibungskupplungsanordnung (22), wobei die Betätigungsanordnung (62) an der Zwischenabstützanordnung (58) zur Bereitstellung einer Reaktionskraftabstützung axial abgestützt ist, eine Elektromaschine (16) mit einer Statoranordnung (18) und einer Rotoranordnung (20), wobei die Rotoranordnung (20) mit der Zwischenwelle (50) zur gemeinsamen Drehung um die Drehachse (A) verbunden ist, eine Anfahrbaugruppe (54) zur Herstellung und Unterbrechung einer Drehmomentübertragungsverbindung im Drehmomentenfluss folgend auf die Rotoranordnung (20).

## Beschreibung

Die vorliegende Erfindung betrifft ein Hybrid-Antriebssystem für ein Fahrzeug.

Derartige Hybrid-Antriebssysteme sind grundsätzlich so aufgebaut, dass das Antriebsdrehmoment wahlweise von einer Brennkraftmaschine oder einer Elektromaschine geliefert werden kann. Auch ein gleichzeitiger Betrieb ist möglich, sowie das Betreiben der Elektromaschine als Starter/Generator. In einem derartigen Hybrid-Antriebssystem müssen verschiedene Funktionalitäten bereitgestellt sein. So muss selbstverständlich neben dem wahlweise Antreiben mit der Brennkraftmaschine oder der Elektromaschine auch eine Trennfunktion im Antriebsstrang vorhanden sein, um den Drehmomentenfluss unterbrechen zu können. Ebenso muss die Möglichkeit geschaffen sein, die Brennkraftmaschine zu starten. Je nach Aufbau eines derartigen Systems kann es auch erforderlich sein, eine Schwingungsdämpfungsfunktionalität vorzusehen, um im Fahrbetrieb auftretende Drehmomentenungleichförmigkeiten abfangen zu können.

Zum Erfüllen dieser Funktionalitäten werden verschiedene Baugruppen, wie z. B. Reibungskupplungen, entweder in Ein- oder Mehrscheibenausführungen, hydrodynamische Drehmomentwandler, Torsionsschwingungsdämpfungsanordnungen, wie z. B. Zweimassenschwungräder oder Torsionsschwingungsdämpfer in Kupplungsscheiben, Starter/Generator-Anordnungen und dergleichen eingesetzt. Durch diese Vielzahl an erforderlichen Baugruppen beanspruchen derartige Hybrid-Antriebssysteme einen vergleichsweise großen Bauraum.

Es ist daher die Aufgabe der vorliegenden Erfindung, ein Antriebssystem, insbesondere Hybrid-Antriebssystem, mit kompakter Baugröße bereitzustellen.

Erfindungsgemäß wird diese Aufgabe gelöst durch ein Hybrid-Antriebssystem für ein Fahrzeug, umfassend eine Brennkraftmaschine mit einer Kurbelwelle, eine erste Reibungskupplungsanordnung, axial folgend auf die Brennkraftmaschine, wobei ein Eingangsbereich der ersten Reibungskupplungsanordnung mit der Kurbelwelle über eine Kopplungsanordnung zur gemeinsamen Drehung um eine Drehachse verbunden ist und wobei eine Kupplungsscheibenanordnung der ersten Reibungskupplungsanordnung mit einer Zwischenwelle zur gemeinsamen Drehung um die Drehachse verbunden ist, eine bezüglich einer feststehenden Baugruppe getragene Zwischenabstützanordnung, an welcher die Zwischenwelle gelagert ist, eine Betätigungsanordnung zur Betätigung der ersten Reibungskupplungsanordnung, wobei die Betätigungsanordnung an der Zwischenabstützanordnung zur Bereitstellung einer Reaktionskraftabstützung axial abgestützt ist, eine Elektromaschine mit einer Statoranordnung und einer Rotoranordnung, wobei die Rotoranordnung mit der Zwischenwelle zur gemeinsamen Drehung um die Drehachse verbunden ist, eine Anfahrbaugruppe zur Herstellung und Unterbrechung einer Drehmomentübertragungsverbindung im Drehmomentenfluss folgend auf die Rotoranordnung.

Bei dem erfindungsgemäß aufgebauten Hybrid-Antriebssystem wird insbesondere durch das Bereitstellen einer Zwischenabstützanordnung, die sowohl der Lagerung der Zwischenwelle, als auch der Abstützung der Betätigungsanordnung dient, die Möglichkeit geschaffen, die verschiedenen Systembereiche kompakt anzuordnen.

Um bei dem erfindungsgemäßen System Achsversätze oder Achsneigungen kompensieren zu können, wird vorgeschlagen, dass die Kopplungsanordnung eine erste radialelastische oder/und axialelastische Kopplungseinheit umfasst. Weiterhin ist es insbesondere zur Dämpfung von im Antriebszustand auftretenden Drehungleichförmigkeiten vorteilhaft, wenn die Kopplungsanordnung eine Torsionsschwingungsdämpferanordnung umfasst.

Selbstverständlich kann die Kopplungsanordnung beispielsweise dann, wenn sehr wenig Bauraum zur Verfügung steht, im Wesentlichen gebildet sein durch Schraubbolzen oder dergleichen, mit welchen der Eingangsbereich der Reibungskupplung an die Kurbelwelle im Wesentlichen ohne Zwischenlagerung weiterer, beispielsweise elastischer Baugruppen angebunden ist.

Insbesondere bei Antriebssystemen, bei welchen große Drehmomente zu übertragen sind, ist es vorteilhaft, wenn die erste Reibungskupplungsanordnung eine Mehrscheibenkupplung umfasst vorzugsweise mit einem ersten Kupplungsbereich mit einer Kupplungsscheibe mit größerer Außenabmessung und einem zweiten Kupplungsbereich mit einer Kupplungsscheibe mit kleinerer Außenabmessung. Auf diese Art und Weise kann die gesamt zur Verfügung stehende Reibfläche vergleichsweise groß gestaltet werden. Durch die Radialabstufung der ersten Reibungskupplungsanordung mit den beiden Kupplungsbereichen wird es möglich, den Bauraum durch Ineinanderschachtelung verschiedener Systembereiche sehr effizient zu nutzen.

Beispielsweise kann vorgesehen sein, dass der zweite Kupplungsbereich der ersten Reibungskupplungsanordnung wenigstens bereichsweise radial innerhalb und sich axial überlappend mit einer Dämpferelementenanordnung der ersten Torsionsschwingungsdämpferanordnung angeordnet ist. Dabei ist es zum Erhalt eines möglichst einfachen Aufbaus vorteilhaft, wenn der zweite Kupplungsbereich der ersten Reibungskupplungsanordnung der Brennkraftmaschine näher liegt, als der erste Kupplungsbereich.

Eine weitere ineinander geschachtelte Anordnung kann vorsehen, dass der zweite Kupplungsbereich der ersten Reibungskupplungsanordnung wenigstens bereichsweise radial innerhalb und sich axial überlappend mit der Zwischenabstützanordnung angeordnet ist. In diesem Fall ist es vorteilhaft, wenn der zweite Kupplungsbereich der ersten Reibungskupplungsanordnung von der Brennkraftmaschine weiter entfernt liegt, als der erste Kupplungsbereich.

Die Dämpfung von Drehungleichförmigkeiten bzw. die Kompensation eines Achsversatzes kann weiter dadurch vorgesehen werden, dass die Kupplungsscheibenanordnung der ersten Reibungskupplungsanordnung eine zweite Torsionsschwingungsdämpferanordnung oder/und eine zweite axialelastische oder/und radialelastische Kopplungseinheit umfasst.

Um dabei für die Torsionsschwingungsdämpferanordnung möglichst viel Bauraum nutzen bzw. bereitstellen zu können, wird weiter vorgeschlagen, dass die zweite Torsionsschwingungsdämpferanordnung wenigstens bereichsweise radial innerhalb und sich axial überlappend mit dem ersten Kupplungsbereich angeordnet ist.

Auch die Betätigungsanordnung kann so in das Gesamtsystem integriert sein, dass sie wenigstens bereichsweise radial innerhalb und sich axial überlappend mit dem ersten Kupplungsbereich angeordnet ist.

Eine weitere Möglichkeit, durch eine sich überlappende Anordnung den zur Verfügung stehenden Bauraum möglichst effizient zu nutzen, kann dadurch bereitgestellt werden, dass die Zwischenabstützanordnung in einem radial inneren Bereich radial innerhalb der Elektromaschine und sich mit dieser axial überlappend angeordnet ist.

Auch die Anfahrbaugruppe kann eine zweite Reibungskupplungsanordnung umfassen. Dabei ist es dann weiterhin vorteilhaft, wenn die zweite Reibungskupplungsanordnung eine Mehrscheibenkupplung umfasst mit einem ersten Kupplungsbereich mit einer Kupplungsscheibe mit größerer Außenabmessung und einem zweiten Kupplungsbereich mit einer Kupplungsscheibe mit kleinerer Außenabmessung.

Dabei wird eine sehr platzsparende Anordnung dadurch realisierbar, dass der zweite Kupplungsbereich der zweiten Reibungskupplungsanordnung wenigstens bereichsweise radial innerhalb und sich axial überlappend mit der Elektromaschine angeordnet ist.

Im Allgemeinen sind die Antriebsaggregate und die zugeordneten Systembereiche eines derartigen Hybrid-Antriebssystems im Frontbereich eines Fahrzeugs untergebracht. In diesem Frontbereich befinden sich auch die Vorderräder und die bei Vorderradantrieb ein Drehmoment zu diesen übertragenden Radantriebswellen. Um auch diese Radantriebswellen raummäßig in das erfindungsgemäße System zu integrieren, wird vorgeschlagen, dass eine sich näherungsweise quer zur Drehachse erstreckende Radantriebswelle sich wenigstens bereichsweise axial überlappend mit dem zweiten Kupplungsbereich oder/und sich wenigstens bereichsweise radial überlappend mit dem ersten Kupplungsbereich der ersten Reibungskupplungsanordnung angeordnet ist.

Gemäß einem weiteren Aspekt betrifft die vorliegende Erfindung ein Antriebssystem für ein Fahrzeug, umfassend ein Antriebsaggregat, eine Reibungskupplungsanordnung, axial folgend auf das Antriebsaggregat, wobei ein Eingangsbereich der Reibungskupplungsanordnung mit einer Antriebswelle des Antriebsaggregats über eine Kopplungsanordnung zur gemeinsamen Drehung um eine Drehachse verbunden ist, wobei die Reibungskupplungsanordnung eine Mehrscheibenkupplung umfasst mit einem ersten Kupplungsbereich mit einer Kupplungsscheibe mit größerer Außenabmessung und einem zweiten Kupplungsbereich mit einer Kupplungsscheibe mit kleinerer Außenabmessung, wobei eine sich näherungsweise quer zur Drehachse erstreckende Radantriebswelle sich wenigstens bereichsweise axial überlappend mit dem zweiten Kupplungsbereich und sich wenigstens bereichsweise radial überlappend mit dem ersten Kupplungsbereich angeordnet ist.

Auch hierbei wird also durch die räumliche Integration einer Radantriebswelle eine sehr kompakte Anordnung geschaffen.

Dabei kann beispielsweise vorgesehen sein, dass die Kopplungsanordnung eine Torsionsschwingungsdämpferanordnung mit einer Dämpferelementenanordnung umfasst, welche sich wenigstens bereichsweise radial mit der Radantriebswelle überlappt.

Die vorliegende Erfindung wird nachfolgend mit Bezug auf die beiliegenden Figuren detailliert beschrieben. Es zeigt:
- Fig. 1: eine Teil-Längsschnittansicht eines Hybrid-Antriebssystems;
- Fig. 2: in prinzipartiger Darstellung ein Hybrid-Antriebssystem mit anderer Relativpositionierung verschiedener Baugruppen;
- Fig. 3: eine der Fig. 2 entsprechende Darstellung eines weiteren alternativen Systems;
- Fig. 4: eine der Fig. 2 entsprechende Darstellung eines weiteren alternativen Systems;
- Fig. 5: eine der Fig. 2 entsprechende Darstellung eines weiteren alternativen Systems;
- Fig. 6: eine der Fig. 2 entsprechende Darstellung eines weiteren alternativen Systems;
- Fig. 7: eine der Fig. 2 entsprechende Darstellung eines weiteren alternativen Systems;
- Fig.8: eine der Fig. 2 entsprechende Darstellung eines weiteren alternativen Systems;
- Fig.9: eine der Fig. 2 entsprechende Darstellung eines weiteren alternativen Systems;
- Fig.10: eine der Fig. 2 entsprechende Darstellung eines weiteren alternativen Systems;
- Fig. 11: eine Teil-Längsschnittansicht des in Fig. 10 gezeigten Antriebssystems;
- Fig. 12: in prinzipartiger Darstellung ein Antriebssystem mit ineinander geschachtelter Anordnung verschiedener Systembereiche;
- Fig. 13: eine Teil-Längsschnittansicht eines weiteren alternativen Hybrid-Antriebssystems;
- Fig. 14: eine Teil-Längsschnittansicht eines weiteren alternativen Hybrid-Antriebssystems.

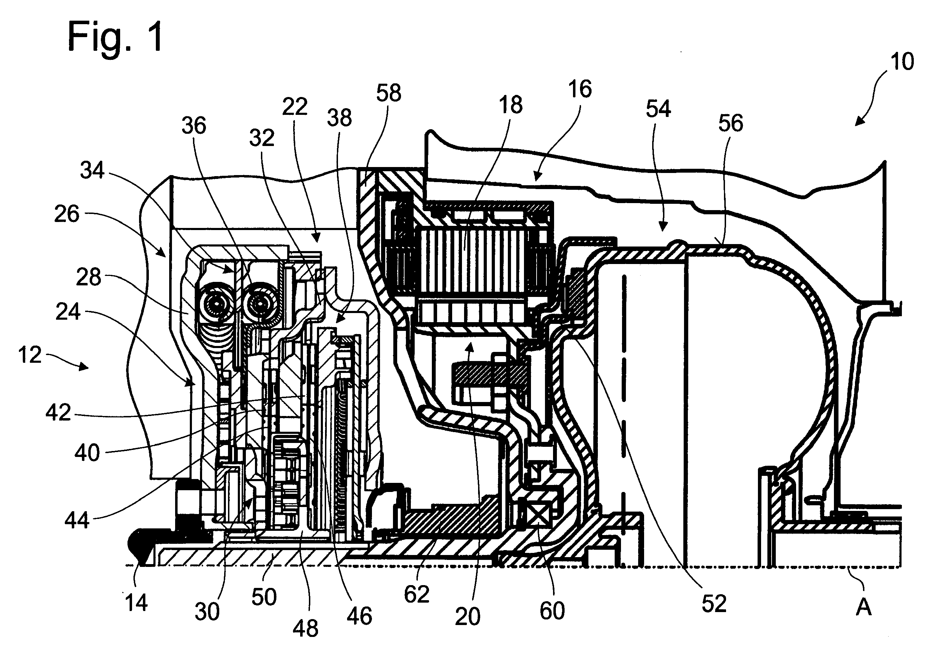

In Fig. 1 ist ein in einem Fahrzeug einzusetzendes Hybrid-Antriebssystem allgemein mit 10 bezeichnet. Dieses Hybrid-Antriebssystem 10 umfasst als die beiden Antriebsaggregate zum einen eine Brennkraftmaschine 12 mit einer Kurbelwelle 14 und zum anderen eine nachfolgend noch detaillierter erläuterte Elektromaschine 16 mit einer Statoranordnung 18 und einer Rotoranordnung 20.

Die Kurbelwelle 14 der Brennkraftmaschine 12 ist mit einer Reibungskupplung 22 über eine Kopplungsanordnung 24 zur Drehmomentübertragung verbunden. Diese Kopplungsanordnung 24 ist im dargestellten Falle als Torsionsschwingungsdämpferanordnung 26 aufgebaut, deren Primärseite 28 mit der Kurbelwelle 14 fest verbunden ist, und deren Sekundärseite 30 mit einem Gehäuse 32 der Reibungskupplung 22 verbunden ist. Eine Dämpferelementenanordnung 34 liegt im dargestellten Aufbau in einem radial äußeren Bereich der Torsionsschwingungsdämpferanordnung 26 und umfasst zwei axial nebeneinander liegende Gruppen von Dämpferelementen, die in diesen jeweils zugeordneten und in Umfangsrichtung sich erstreckenden Federkanälen angeordnet sind. Es ist selbstverständlich, dass hier auch lediglich eine Gruppe derartiger in Umfangsrichtung aufeinander folgender Dämpferelemente bzw. Dämpferfedern eingesetzt werden kann.

Die Reibungskupplung 22 ist als Zweischeibenkupplung aufgebaut und umfasst mithin zwei Kupplungsbereiche 36, 38 jeweils mit einer Kupplungsscheibe 40 bzw. 42. Die Kupplungsscheibe 42 des Kupplungsbereichs 38 weist einen größeren Durchmesser auf, als die Kupplungsscheibe 40 des Kupplungsbereichs 36, so dass sich auch eine entsprechende Radialrelativdimensionierung dieser beiden Kupplungsbereiche 38, 36 ergibt. In Zuordnung zu diesen beiden Kupplungsbereichen 38, 36 vorgesehene Reibflächen liegen selbstverständlich im Wesentlichen auf dem gleichen radialen Niveau, wie die an den Kupplungsscheiben 42, 40 vorgesehenen Reibbeläge. Bei jeder Kupplungsscheibe ist ein axialelastischer oder/und radialelastischer Trägerbereich 44 bzw. 46 vorgesehen, über welchen die jeweiligen Reibbeläge mit einem radial innen angeordneten, gemeinsamen Nabenbereich 48 verbunden sind. Durch diese Elastizität der Trägerbereiche 44, 46 können Achsversätze und geringfügige Achsneigungen kompensiert werden. Es sei hier darauf hingewiesen, dass die Anbindung der Reibbeläge bzw. der Kupplungsscheiben 40, 42 an den gemeinsamen Nabenbereich 48 auch vermittels einer weiteren Torsionsschwingungsdämpferanordnung erfolgen kann.

Der Nabenbereich 48 ist in Drehkopplungseingriff mit einer Zwischenwelle 50, die in ihrem von der Brennkraftmaschine 12 entfernt liegenden Endbereich fest verbunden ist mit der Rotoranordnung 20 der Elektromaschine 16. Über die Rotoranordnung 20 ist mittels eines axial- oder/und radialelastischen Kopplungselements 52 die Zwischenwelle 50 auch mit einer allgemein mit 54 bezeichneten Anfahrbaugruppe gekoppelt. Diese hier nur schematisch mit ihrem Außenumriss dargestellte Anfahrbaugruppe sorgt dafür, dass im Antriebsstrang beispielsweise zum Anfahren oder bei Durchführung von Schaltvorgängen eine Unterbrechung des Drehmomentenflusses bzw. die Herstellung des Drehmomentenflusses ermöglicht ist. Im dargestellten Beispiel ist die Anfahrbaugruppe 54 als hydrodynamischer Drehmomentwandler ausgebildet, der das Antriebsdrehmoment in seinem Gehäusebereich aufnimmt und über ein nicht weiter dargestelltes Turbinenrad an eine Abtriebswelle, also beispielsweise eine Getriebeeingangswelle, weitergibt.

Auch hier ist durch die Elastizität des Kopplungselements 52 dafür gesorgt, dass möglicherweise vorhandene Achsversätze oder Achsneigungen kompensiert werden können.

In den zwischen der Elektromaschine 16 und der Reibungskupplung 22 gebildeten Raumbereich greift ein Zwischenabstützelement 58 ein. Dieses ist in seinem äußeren Bereich bezüglich einer feststehenden Baugruppe, also beispielsweise eines Getriebegehäuses oder des Motorblocks der Brennkraftmaschine 12 oder dergleichen feststehend getragen und erstreckt sich mit seinem radial inneren Bereich bis an die Zwischenwelle 50 heran. Über ein Lager 60 ist die Zwischenwelle 50 an dem Zwischenabstützelement 58 radial gelagert und auch in axialer Richtung fest positioniert. Das Zwischenabstützelement 58 kann gleichzeitig auch die Funktionalität eines Trägers für die Statoranordnung der Elektromaschine 16 übernehmen.

Um die Reibungskupplung 22 einrücken bzw. ausrücken zu können, und somit eine Drehmomentverbindung zwischen der Zwischenwelle 50 und der Kurbelwelle 14 herstellen zu können bzw. unterbrechen zu können, ist eine allgemein mit 62 bezeichnete Betätigungsanordnung vorhanden. Diese im Falle der dargestellten Reibungskupplung 22 des Normal-Geschlossen-Typs als Ausrücker zu bezeichnende Betätigungsanordnung 62 erzeugt beispielsweise auf hydraulischem oder mechanischem Wege eine im Wesentlichen axial gerichtete Betätigungskraft für die Reibungskupplung 22 und stützt sich dabei an ihrem von der Reibungskupplung 22 entfernt liegenden Endbereich am Zwischenabstützelement 58 axial ab. Im Einrückzustand beaufschlagt in an sich bekannter Weise ein Kraftspeicher der Reibungskupplung 22 eine Anpressplatte, die wiederum eine Reibwechselwirkung zu den beiden Kupplungsscheiben 40, 42 bzw. einer dazwischen angeordneten Zwischenscheibe herstellt. Zum Ausrücken stützt sich die Betätigungsanordnung 62 axial am Zwischenabstützelement 58 ab und beaufschlagt den Kraftspeicher, um somit die Reibwechselwirkung innerhalb der Reibungskupplung 22 zu mindern bzw. aufzuheben.

Man erkennt bei dem in Fig. 1 dargestellten Aufbau, dass durch die Relativpositionierung der verschiedenen Baugruppen bezüglich einander eine axial sehr kompakte Bauweise geschaffen ist. Zunächst trägt hierzu bei, dass derjenige Bereich der Torsionsschwingungsdämpferanordnung 26, in welchem die Dämpferelementenanordnung 34 angeordnet ist, sich bereichsweise axial überlappt mit der Reibungskupplung 22, nämlich dem Kupplungsbereich 36 derselben, dessen Kupplungsscheibe 40 den geringeren Außendurchmesser aufweist. Weiterhin erstreckt sich das Zwischenabstützelement 58 in seinem radial inneren Bereich axial unter die Elektromaschine 16 und überlappt sich somit mit dieser, um Bauraum zur Aufnahme der Betätigungsanordnung 62 bereitzustellen, die sich ebenfalls axial mit dem Zwischenabstützelement 58 und auch axial mit der Elektromaschine 16 überlappt. Da die Elektromaschine 16 als Innenläufermaschine ausgebildet ist, also die Rotoranordnung 20 radial innerhalb der Statoranordnung 18 positioniert ist, ist es weiterhin möglich, die Anfahrbaugruppe 54 axial sehr nahe an das Zwischenabstützelement 58 heranzurücken.

Es sei darauf hingewiesen, dass selbstverständlich bei dem vorangehend beschriebenen Hybrid-Antriebssystem 10 die verschiedenen Systembereiche Torsionsschwingungsdämpferanordnung 26, Reibungskupplung 22, Elektromaschine 16, Betätigungsanordnung 62, Zwischenabstützelement 58 und Anfahrbaugruppe 54 in konstruktiv anderer Art und Weise ausgeführt sein können, als im konkreten Beispiel dargestellt. Von Bedeutung ist lediglich, dass durch die erkennbare radiale bzw. axiale Staffelung eine sehr kompakte, bauraumsparende Gesamtanordnung für dieses Hybrid-Antriebssystem bereitgestellt werden kann.

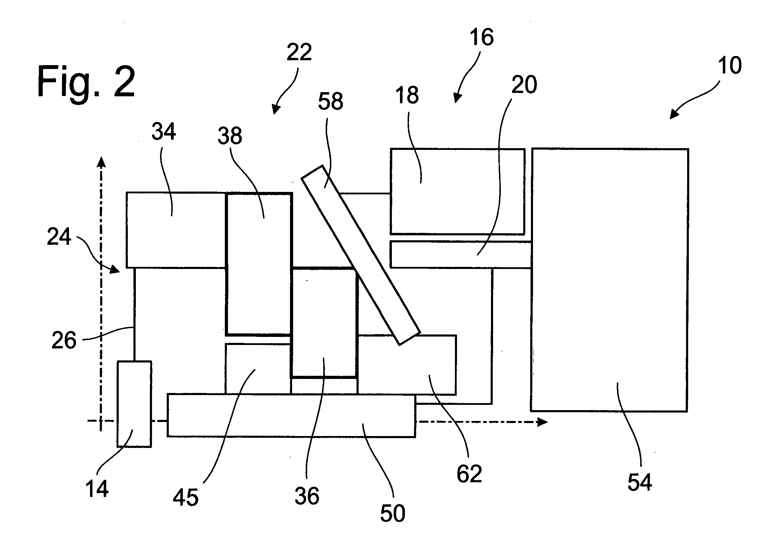

Nachfolgend werden mit Bezug auf die Fig. 2 bis 10 weitere Alternativen von Hybrid-Antriebssystemen beschrieben, bei welchen die verschiedenen Baugruppen, die in Fig. 1 detaillierter dargestellt sind, nur prinzipartig gezeigt sind, bei welchen jedoch andere Radial- bzw. Axialrelativpositionierungen bzw. auch andere Erstreckungsrichtungen vorhanden sind.

Zunächst ist in Fig. 2 erkennbar, dass bei der Reibungskupplung 22 die axiale Lage der beiden Kupplungsbereiche 36, 38 bezüglich einander vertauscht ist. Der Kupplungsbereich 38 mit größerer Außenabmessung liegt näher an der Brennkraftmaschine und neben der Dämpferelementenanordnung 34 der Torsionsschwingungsdämpferanordnung 26. Die Drehmomentübertragungsverbindung zwischen den Kupplungsscheiben der beiden Kupplungsbereiche 36, 38 und der Zwischenwelle 50 erfolgt über eine hier schematisch dargestellte Nebensteifigkeit 45, also beispielsweise die beiden vorangehend beschriebenen, elastischen Trägerbereiche 44, 46 oder eine Torsionsschwingungsdämpferanordnung, die dann, wie in Fig. 2 gezeigt, vorteilhafterweise vollständig radial innerhalb des Kupplungsbereichs 38 mit größerer Außenabmessung bzw. größerer Kupplungsscheibe aufgenommen ist.

Das Zwischenabstützelement 58, das wiederum den Träger für die Statoranordnung 18 der Elektromaschine 16 bereitstellen kann, ist schräggestellt, so dass die Reibungskupplung 22 zumindest mit ihrem Kupplungsbereich 36 mit kleinerer Außenabmessung bzw. mit der Kupplungsscheibe mit kleinerer Außenabmessung teilweise unter dem Zwischenabstützelement 58 liegt, welches sich wiederum durch seine Schrägstellung auch radial unter bzw. axial überlappend mit der Elektromaschine 16 erstreckt.

Die Anfahrbaugruppe 54, beispielsweise wieder in Form eines hydrodynamischer Drehmomentwandlers ausgebildet, ist axial folgend auf die Elektromaschine 16 angeordnet und mit der Rotoranordnung 20 derselben beispielsweise über ein radial- oder/und axialelastisches Kopplungselement gekoppelt.

Bei der in Fig. 2 dargestellten Ausgestaltungsform ist es möglich, für die Kupplungsscheibe des Kupplungsbereichs 36 anorganische Reibbeläge einzusetzen, die thermisch stabiler sind und somit auch bei der hier erfolgenden Einkapselung durch das Zwischenabstützelement 58 nicht durch übermäßige Erwärmung beschädigt werden können.

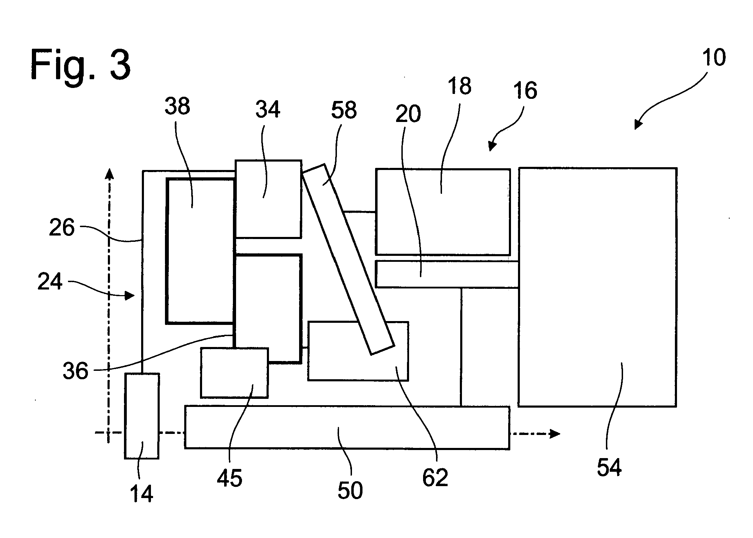

Bei dem in Fig. 3 gezeigten Hybrid-Antriebssystem 10 ist der Aufbau der die Kurbelwelle 14 mit der Reibungskupplung 20 koppelnden Kopplungsanordnung 24, also hier der Torsionsschwingungsdämpferanordnung 26, derart, dass die Dämpferelementenanordnung 34 mit dem sie aufnehmenden Bereich, also dem zugeordneten oder den zugeordneten Federkanälen, wieder radial außerhalb und sich axial überlappend mit dem Kupplungsbereich 36 mit kleinerer Außenabmessung angeordnet ist. Da dieser von der Brennkraftmaschine weiter entfernt liegt, als der Kupplungsbereich 38, liegt auf die Dämpferelementenanordnung 34 hier an der von der Brennkraftmaschine abgewandten Seite des Kupplungsbereichs 38 mit größerer Außenabmessung und überlappt sich radial mit diesem. Die Nebensteifigkeit 45, also beispielsweise eine Torsionsschwingungsdämpferanordnung bzw. elastische Kopplungsanordnung, ist hier so positioniert, dass sie axial mit beiden Kupplungsbereichen 36, 38 überlappt.

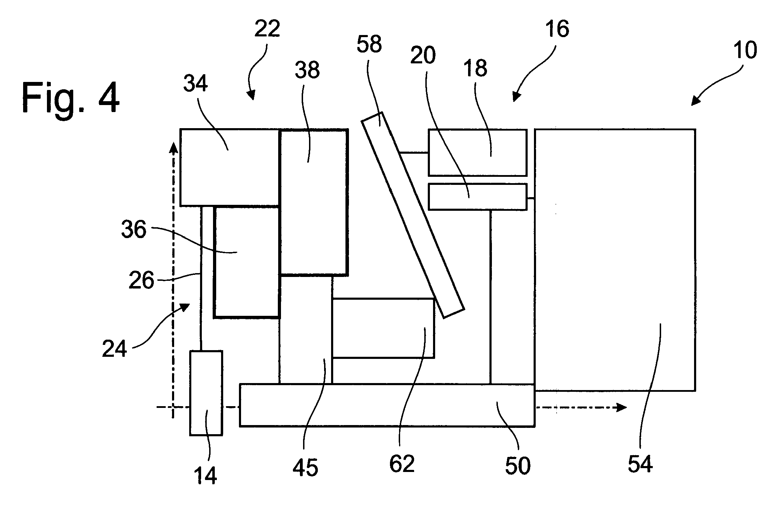

Bei dem in Fig. 4 dargestellten Hybrid-Antriebssystem 10 ist der Kupplungsbereich 36 mit der Kupplungsscheibe 40 mit kleinerer Außenabmessung, der selbst also auch eine kleinere Außenabmessung aufweist, als der andere Kupplungsbereich 38, der Brennkraftmaschine näher liegend positioniert und überlappt sich axial mit der Dämpferelementenanordnung 34 bzw. dem diese aufnehmenden Bereich der Torsionsschwingungsdämpferanordnung 26. Weiterhin erkennt man, dass die Nebensteifigkeit 45 sich im Wesentlichen vollständig axial überlappend zum Kupplungsbereich 38 angeordnet ist dass auch die Betätigungsanordnung 62 axial bis unter den Bereich des Kupplungsbereichs 38 eingreifend positioniert ist.

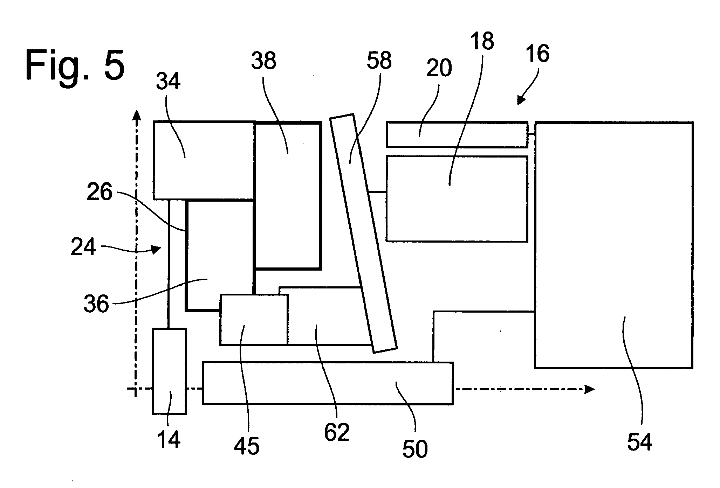

Das in Fig. 5 gezeigte Hybrid-Antriebssystem ist mit einer Elektromaschine 16 des so genannten Außenläufertyps aufgebaut. Das heißt, die Rotoranordnung 20 ist nunmehr die Statoranordnung 18 radial außen umgebend angeordnet. Weiterhin erkennt man, dass die Nebensteifigkeit 45, also beispielsweise eine Torsionsschwingungsdämpferanordnung oder elastische Kopplungsbereiche, sich mit beiden Kupplungsbereichen 36, 38 beispielsweise näherungsweise gleich weit axial überlappt. Im Vergleich zur Ausgestaltungsform der Fig. 4 kann somit die Betätigungsanordnung 62 axial tiefer unter den Kupplungsbereich 38 mit größerer Außenabmessung eintauchen, der auch im radial inneren Bereich mehr Bauraum zur Aufnahme der Betätigungsanordnung 62 bereitstellen kann, als der Kupplungsbreich 36.

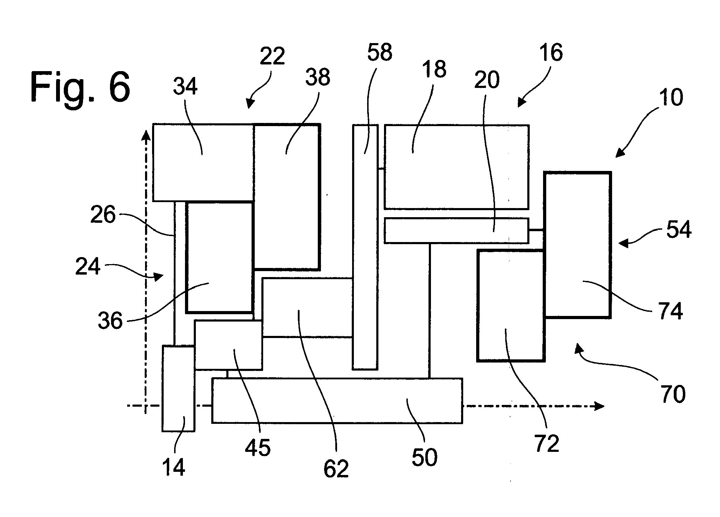

In Fig. 6 ist eine Ausgestaltungsform des Hybrid-Antriebssystems 10 gezeigt, bei welchem die Dämpferelementenanordnung 34 der Torsionsschwingungsdämpferanordnung 26 sich mit dem Kupplungsbereich 36 der Reibungskupplung 22 überlappt. Weiterhin ist die Nebensteifigkeit 45, beispielsweise in Form einer Torsionsschwingungsdämpferanordnung, im radial inneren Bereich des Kopplungsbereichs 36 angeordnet. Somit kann die Betätigungsanordnung 62 noch weiter in den vom Kupplungsbereich 38 umschlossenen Raumbereich erstrecken. Das Zwischenabstützelement 58 erstreckt sich nähereungsweise radial und kann wieder einen Träger für die Statoranordnung 18 der Elektromaschine 16 bereitstellen. Die Anfahrbaugruppe 54 ist bei der in Fig. 6 dargestellten Ausgestaltungsform ebenfalls als Reibungskupplung 70 ausgebildet. Auch diese Reibungskupplung 70 ist eine Zweischeibenkupplung mit zwei Kupplungsbereichen 72, 74. Der Kupplungsbereich 74 weist eine hier nicht dargestellte Kupplungsscheibe mit größerer Außenabmessung auf, als der Kupplungsbereich 72 und ist somit radial auch etwas größer gebaut, als der Kupplungsbereich 72. Dies ermöglicht es, die Reibungskupplung 70 sehr nahe an die Elektromaschine 16 heranzurücken, so dass der Kupplungsbereich 72 mit der Kupplungsscheibe mit geringerer Außenabmessung radial innerhalb der Elektromaschine 16, insbesondere der Rotoranordnung 20, positioniert werden kann. Hier ist eine Anordnung geschaffen, bei welcher nahezu der vollständige umschlossene Bauraum effizient genutzt wird, um ein axial sehr kurz bauendes System zu realisieren.

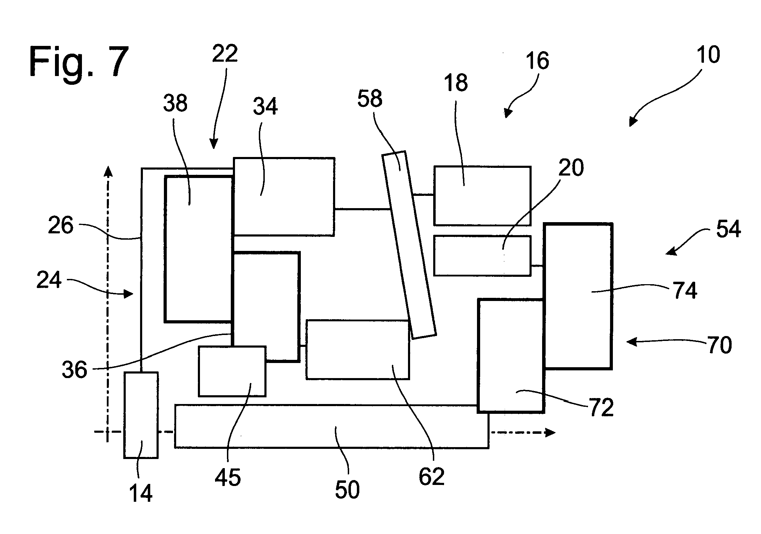

Bei dem in Fig. 7 gezeigten Hybrid-Antriebssystem 10 ist die Lage der beiden Kupplungsbereiche 36, 38 der Reibungskupplung 22 wieder derart, dass der Kupplungsbereich 38 mit der größeren Außenabmessung näher an der Brennraftmaschine positioniert ist und die Dämpferelementenanordnung 34 der Torsionsschwingungsdämpferanordnung 26 den von der Brennkraftmaschine weiter entfernt liegenden Kupplungsbereich 36 umgebend angeordnet ist. Die Betätigungsanordnung 62 liegt im Wesentlichen axial folgend auf die Reibungskupplung 22 und stützt sich an dem radial innen auch zumindest leicht axial unter die Elektromaschine 16 eingreifenden Zwischenabstützelement 58 ab. Die Reibungskupplung 70, die im Wesentlichen als Anfahrkupplung genutzt wird bzw. auch bei Durchführung von Gangwechselvorgängen aktiviert wird, liegt mit ihrem Kupplungsbereich 72 mit geringerer Außenabmessung wieder radial innerhalb und axial innerhalb der Elektromaschine 16 und überlappt sich mit dieser axial.

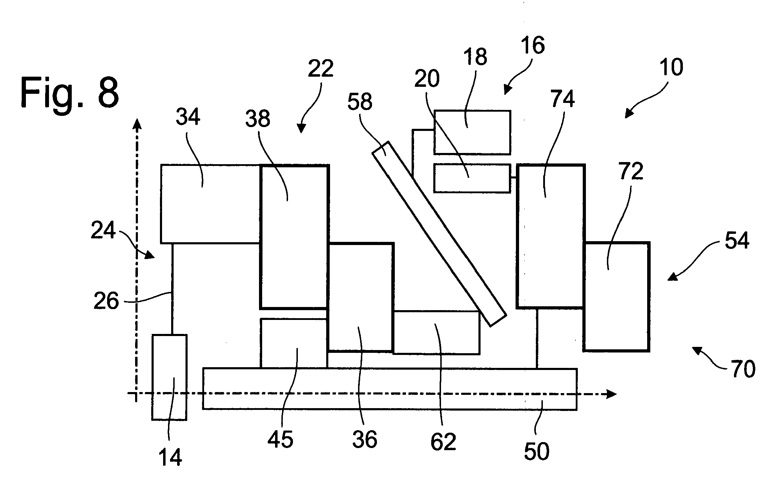

Das in Fig. 8 gezeigte Hybrid-Antriebssystem 10 ist so aufgebaut, dass, ähnlich wie bei der Ausgestaltungsform der Fig. 7, der Kupplungsbereich 38 der Reibungskupplung 22 näher an der Brennkraftmaschine liegt und auch die Dämpferelementenanordnung 34 axial neben der Reibungskupplung 22 positioniert ist. Auch die beiden Kupplungsbereiche 72, 74 der als Anfahrkupplung einzusetzenden Reibungskupplungen 70 sind so positioniert, dass der Kupplungsbereich 74 mit der größeren Außenabmessung näher an der Brennkraftmaschine liegt und der Kupplungsbereich 72 mit geringerer Außenabmessung näher am Getriebe liegt und somit auch enger in eine Getriebeglocke eingepasst werden kann.

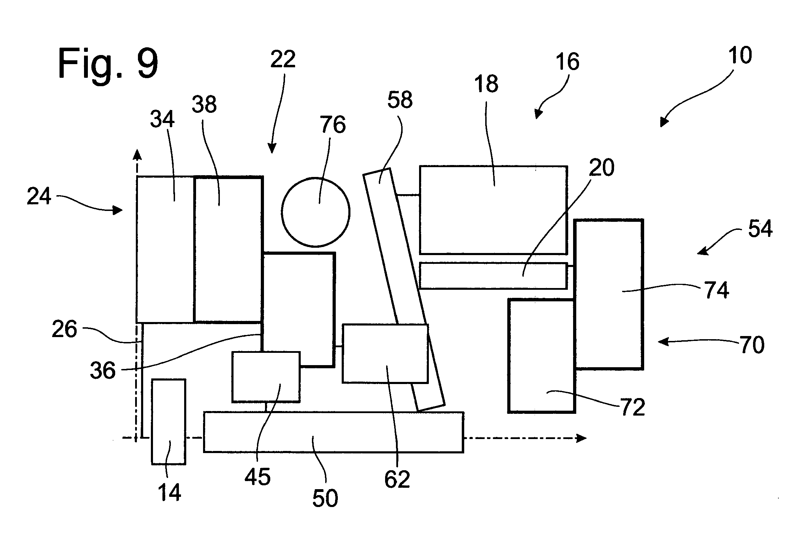

Bei dem in Fig. 9 gezeigten Hybrid-Antriebssystem 10 liegt der Kupplungsbereich 38 der Reibungskupplung 22 axial folgend auf die Dämpferelementenanordnung 34 der Torsionsschwingungsdämpferanordnung 26. In dem zwischen diesem Kupplungsbereich 38 und dem radial äußeren Bereich des Zwischenabstützelements 58 vorhandenen Bauraum liegt eine sich im Wesentlichen quer in einem Fahrzeug erstreckende Radantriebswelle 76. Diese von einem Differential angetriebene und ein Antriebsrad, welches hier ein Vorderrad ist, zur Drehung antreibende Radantriebswelle ist somit bauraummäßig in das Hybrid-Antriebssystem 10 integriert und gestattet es, den verfügbaren Bauraum auch in Längsrichtung des Fahrzeugs effizient zu nutzen. Das die Radantriebswelle 76 antreibende Differential wiederum steht in Antriebsverbindung mit einem hier nicht dargestellten und axial auf die Reibungskupplung 70 folgenden Getriebe. Der Vorteil einer derartigen Anordnung ist es, dass das gesamte Antriebssystem und insbesondere die Brennkraftmaschine in einem Fahrzeug möglichst weit nach hinten gerückt werden kann, ohne dass ein gegenseitiges Stören des Differentials mit einer Getriebeglocke erzeugt wird.

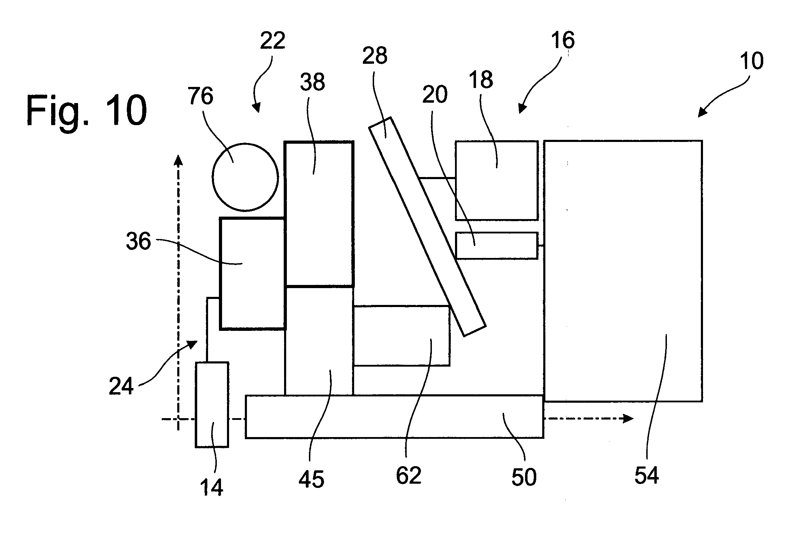

Eine Abwandlung hierzu ist in Fig. 10 erkennbar. Man erkennt, dass die Reibungskupplung 22 mit der Kurbelwelle 14 nicht über eine Torsionsschwingungsdämpferanordnung, sondern über eine beispielsweise als Flexplatte oder dergleichen ausgebildete Kopplungsanordnung 24 verbunden ist, was es ermöglicht, die Reibungskupplung 22 noch näher an die Brennkraftmaschine heran zu rücken. Die Radantriebswelle 76 erstreckt sich radial außerhalb des Kupplungsbereichs 36 und sich mit diesem axial überlappend. Dieser Kupplungsbereich 36 ist hier ist hier wieder näher an der Brennkraftmaschine, als der Kupplungsbereich 38, welcher sich nach radial außen hin mit der Radantriebswelle 76 überlappt. Radial innerhalb dieses Kupplungsbereichs 38 kann die Nebensteifigkeit 45, also beispielsweise eine Torsionsschwingungsdämpferanordnung oder dergleichen, zumindest mit ihren wesentlichen Baugruppen aufgenommen sein.

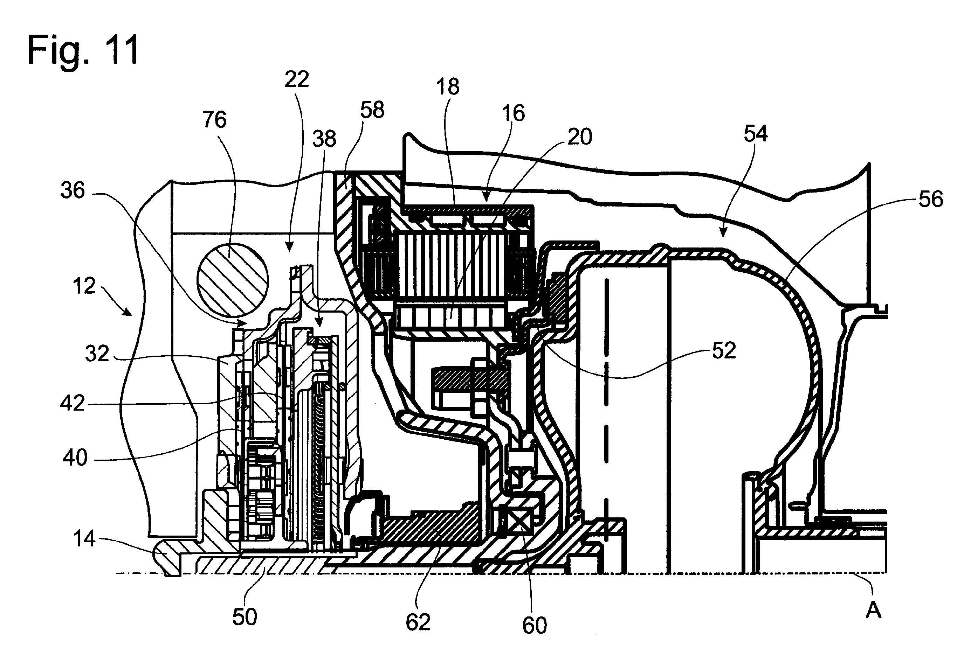

Die Fig. 11 zeigt im Teil-Längsschnitt ein derartiges Hybrid-Antriebssystem 10, wie es vorangehend mit Bezug auf die Fig. 10 beschrieben wurde. Dabei entspricht die in Fig. 11 dargestellte Ausgestaltungsvariante in wesentlichen Bereichen der vorangehend bereits mit Bezug auf die Fig. 1 beschriebenen Ausgestaltungsvariante, insbesondere was die Ausgestaltung der Reibungskupplung 22, der Elektromaschine 16 und der Anfahrbaugruppe 54 betrifft. Man erkennt jedoch, dass der Eingangsbereich der Reibungskupplung 22, nämlich das Gehäuse derselben, hier radial innen über schematisch dargestellte Schraubbolzen oder dergleichen direkt an die Kurbelwelle 14 angebunden ist. Hier übernehmen also derartige Schraubbolzen die Funktionalität einer Kopplungsanordnung 24, die jedoch keinerlei Elastizität in axialer bzw. radialer Richtung ermöglicht. Radial außerhalb und sich axial überlappend mit dem Kupplungsbereich 36 der Reibungskupplung 22 ist die Radantriebswelle 76 angeordnet, und zwar so, dass diese sich auch axial zumindest mit dem Gehäuse 32 der Reibungskupplung 22 im Bereich des Kupplungsbereichs 38 mit der größeren Radialabmessung überlappt.

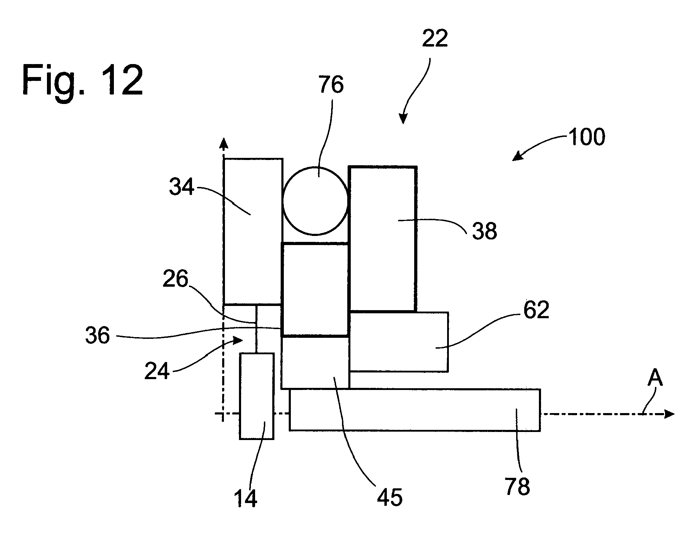

In Fig. 12 ist ein Antriebssystem 100 gezeigt, welches als konventionelles, beispielsweise nur mit einer Brennkraftmaschine arbeitendes Antriebssystem ausgebildet ist. Die Kurbelwelle 14 dieser Brennkraftmaschine oder eine sonstige Antriebswelle ist über eine Torsionsschwingungsdämpferanordnung 26 als Kopplungsanordnung 24 mit der Reibungskupplung 22 gekoppelt, welche wiederum als Zweischeibenkupplung mit zwei Kupplungsbereichen 36 und 38 ausgebildet ist. Der Kupplungsbereich 36 mit kleinerer Außenabmessung ist näher am Antriebsaggregat positioniert, als der Kupplungsbereich 38. Die Radantriebswelle 76 erstreckt sich radial außerhalb des Kupplungsbereichs 36 und axial zwischen der Dämpferelementenanordnung 34 und dem Kupplungsbereich 38. Die Nebensteifigkeit, also beispielsweise eine in einer Kupplungsscheibenanordnung oder einer Nabenanordnung vorgesehene Torsionsschwingungsdämpferanordnung, liegt im Wesentlichen radial innerhalb des Kupplungsbereichs 36, so dass die Betätigungsanordnung 62 sich bis in den Bereich radial innerhalb des Kupplungsbereichs 38 erstrecken kann. Die Nebensteifigkeit 55 ist drehfest verbunden mit einer Abtriebswelle 78, die beispielsweise eine Getriebeeingangswelle sein kann.

Auch bei diesem Antriebssystem 10 wird der vorhandene Bauraum sehr effizient genutzt.

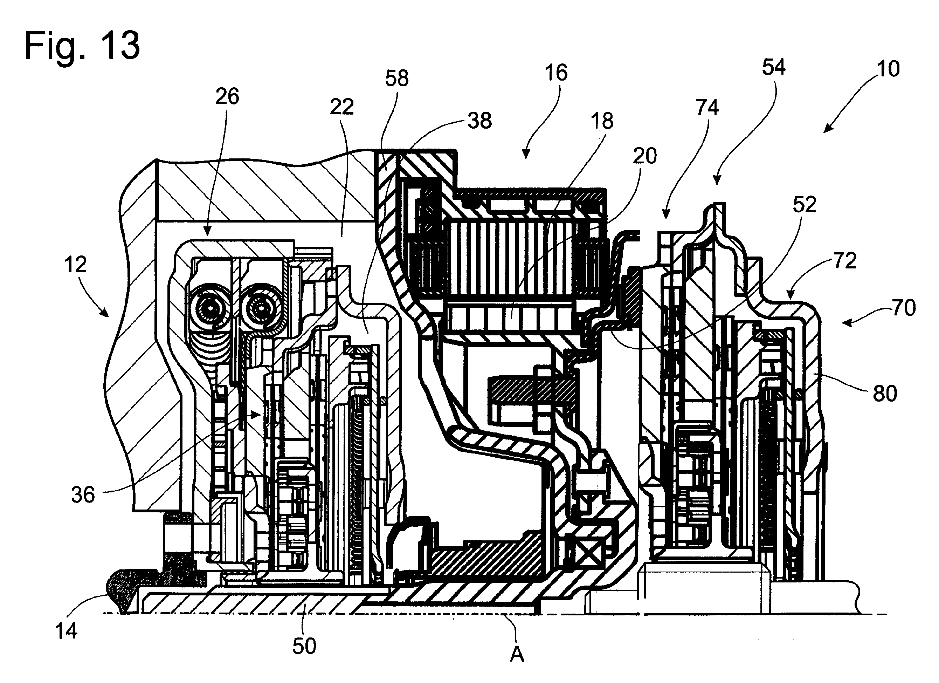

Eine weitere Ausgestaltungsvariante eines Hybrid-Antriebssystems 10 ist in Fig. 13 im Längsschnitt dargestellt. Man erkennt wieder die mit der Antriebswelle 14 über die Torsionsschwingungsdämpferanordnung 26 verbundene Reibungskupplung 22 mit den beiden Kupplungsbereichen 36, 38. Auch hier entspricht die Ausgestaltung insbesondere hinsichtlich der Positionierung der Torsionsschwingungsdämpferanordnung 26, der Reibungskupplung 22 und der Elektromaschine 16 bezüglich einander der vorangehend mit Bezug auf die Fig. 1 beschriebenen Ausgestaltungsform. Es wird daher auf die diesbezüglichen Ausführungen verwiesen.

Die Rotoranordnung 20 ist vermittels des axial- oder/und radialelastischen Kopplungselements 52 nunmehr mit dem Eingangsbereich einer als Anfahrelement 54 hier eingesetzten Reibungskupplung 70 verbunden. Dies bedeutet, dass ein Gehäuse 80 dieser Reibungskupplung 70 mit der Rotoranordnung 22 zur gemeinsamen Drehung gekoppelt ist. Die beiden Kupplungsbereiche 74, 76 sind bei dieser axial folgend auf die Elektromaschine 16 angeordneten Reibungskupplung 70 so angeordnet, dass der Kupplungsbereich 74 mit größerer Radialabmessung näher an der Elektromaschnine 16 liegt, als der Kupplungsbereich 72 mit kleinerer Radialabmessung. Dies gestattet es beispielsweise, diese als Anfahrbaugruppe 54 wirksame Reibungskupplung 70 stärker in ein Getriebegehäuse integriert anzuordnen.

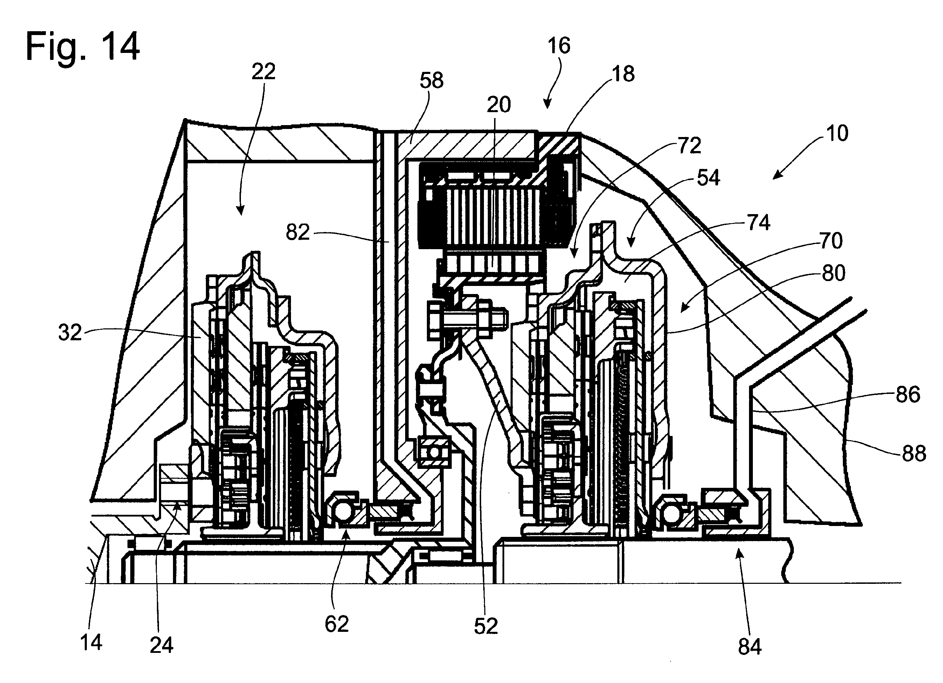

Auch in Fig. 14 ist ein Hybrid-Antriebssystem 10 gezeigt, bei welchem die als Anfahrbaugruppe 54 dienende Reibungskupplung 70 mit ihrem Kupplungsbereich 72 mit kleinerer Radialabmessung näher an der Elektromaschine 16 angeordnet ist und bereichsweise radial unter dieser und axial sich mit dieser überlappend angeordnet ist. Ein Kopplungselement 52 ist mit dem Kupplungsgehäuse 80 verbunden und stellt somit dessen Drehverbindung mit der Rotoranordnung 20 her. Die Statoranordnung 18 ist beispielsweise an dem Zwischenabstützelement 58 getragen. Dieses erstreckt sich in weiten Bereichen näherungsweise radial nach innen und weist in seinem Innenvolumenbereich einen oder mehrere Kanäle 82 auf, über welche Druckfluid für die Betätigungsanordnung 62 nach radial innen geleitet werden kann. Diese ist hier also nach Art eines Nehmerzylinders aufgebaut. Auch eine Betätigungsanordnung 84 für die als Anfahrbaugruppe 54 wirksame Reibungskupplung 70 ist nach Art eines Nehmerzylinders 84 aufgebaut. Eine Versorgungsleitung 86 führt beispielsweise durch eine Getriebeglocke 88 hindurch nach radial innen zu dieser Betätigungsanordnung 84.

Die in Fig. 14 gezeigte Ausgestaltungsvariante ist insbesondere aufgrund der axialen Überlappung der Elektromaschine 16 mit der Reibungskupplung 70 und aufgrund der Tatsache, dass die Reibungskupplung 22 unmittelbar an die Kurbelwelle 14 angebunden ist, axial sehr kurzbauend. Auch hier ist also das Gehäuse 32 der Reibungskupplung 22 durch als Kopplungsanordnung 24 wirksame Schraubbolzen oder dergleichen radial innen an einen Kurbelwellenflansch der Kurbelwelle 14 fest angeschraubt. Somit ist radial außen an der Reibungskupplung 22 Bauraum geschaffen, in dem beispielsweise eine Radantriebswelle sich mit der Reibungskupplung 22 axial und beispielsweise der Statoranordnung 18 der Elektromaschine 16 radial überlappend angeordnet werden kann.

Es sei darauf hingewiesen, dass selbstverständlich verschiedene Aspekte der vorangehend beschriebenen Ausgestaltungsformen von Antriebssystemen kombiniert werden können. So könnte selbstverständlich bei allen Ausgestaltungsformen die Kopplungsanordnung 24 als axialelastische oder/und radialelastische Anordnung, beispielsweise Flexplatte oder dergleichen, ausgebildet sein bzw. in derartiger Form auch mit einer Torsionsschwingungsdämpferanordnung kombiniert sein. Die Anfahrbaugruppe 54 kann selbstverständlich verschiedene Bauformen aufweisen, die vom gewünschten Aufbau des Gesamtantriebs abhängig ausgewählt werden. So ist selbstverständlich auch der Einsatz einer normalen Einscheibenkupplung, einer Doppelkupplung für zwei Getriebeeingangswellen oder eines Getriebes als Anfahrbaugruppe denkbar, in welchem Getriebe selbst dann eine oder mehrere Kupplungsanordnungen zum wahlweisen Unterbrechen bzw. Herstellen der Drehmomentübertragungsverbindung vorhanden sein können. Ferner wird darauf hingewiesen, dass alle Baugruppen, also beispielsweise die Torsionsschwingungsdämpferanordnungen, die verschiedenen Reibungskupplungen und selbstverständlich auch die Betätigungsanordnung und die Elektromaschine mit allen im Stand der Technik bekannten Variationsmöglichkeiten aufgebaut sein können, um die für einen jeweiligen Einsatzzweck optimalen Gesamtbedingungen zu erhalten.

## Patentansprüche

1. Hybrid-Antriebssystem für ein Fahrzeug, umfassend:
- eine Brennkraftmaschine (12) mit einer Kurbelwelle (14),
- eine erste Reibungskupplungsanordnung (12), axial folgend auf die Brennkraftmaschine (12), wobei ein Eingangsbereich (32) der ersten Reibungskupplungsanordnung (22) mit der Kurbelwelle (14) über eine Kopplungsanordnung (24) zur gemeinsamen Drehung um eine Drehachse (A) verbunden ist und wobei eine Kupplungsscheibenanordnung (40, 42) der ersten Reibungskupplungsanordnung (22) mit einer Zwischenwelle (50) zur gemeinsamen Drehung um die Drehachse (A) verbunden ist,
- eine bezüglich einer feststehenden Baugruppe getragene Zwischenabstützanordnung (58), an welcher die Zwischenwelle (50) gelagert ist,
- eine Betätigungsanordnung (62) zur Betätigung der ersten Reibungskupplungsanordnung (22), wobei die Betätigungsanordnung (62) an der Zwischenabstützanordnung (58) zur Bereitstellung einer Reaktionskraftabstützung axial abgestützt ist,
- eine Elektromaschine (16) mit einer Statoranordnung (18) und einer Rotoranordnung (20), wobei die Rotoranordnung (20) mit der Zwischenwelle (50) zur gemeinsamen Drehung um die Drehachse (A) verbunden ist,
- eine Anfahrbaugruppe (54) zur Herstellung und Unterbrechung einer Drehmomentübertragungsverbindung im Drehmomentenfluss folgend auf die Rotoranordnung (20).

2. Hybrid-Antriebssystem nach Anspruch 1,
**dadurch gekennzeichnet, dass** die Kopplungsanordnung (24) eine erste radialelastische oder/und axialelastische Kopplungseinheit umfasst.

3. Hybrid-Antriebssystem nach Anspruch 1 oder 2,
**dadurch gekennzeichnet, dass** die Kopplungsanordnung (24) eine erste Torsionsschwingungsdämpferanordnung (26) umfasst.

4. Hybrid-Antriebssystem nach einem der Ansprüche 1 bis 3,
**dadurch gekennzeichnet, dass** die erste Reibungskupplungsanordnung (22) eine Mehrscheibenkupplung umfasst.

5. Hybrid-Antriebssystem nach Anspruch 4,
**dadurch gekennzeichnet, dass** die Mehrscheibenkupplung mit einem ersten Kupplungsbereich (38) mit einer Kupplungsscheibe (42) mit größerer Außenabmessung und einem zweiten Kupplungsbereich (36) mit einer Kupplungsscheibe (40) mit kleinerer Außenabmessung ausgebildet ist.

6. Hybrid-Antriebssystem nach Anspruch 3 und Anspruch 5,
**dadurch gekennzeichnet, dass** der zweite Kupplungsbereich (36) der ersten Reibungskupplungsanordnung (22) wenigstens bereichsweise radial innerhalb und sich axial überlappend mit einer Dämpferelementenanordnung (34) der ersten Torsionsschwingungsdämpferanordnung (26) angeordnet ist.

7. Hybrid-Antriebssystem nach Anspruch 6,
**dadurch gekennzeichnet, dass** der zweite Kupplungsbereich (36) der ersten Reibungskupplungsanordnung (22) der Brennkraftmaschine (12) näher liegt, als der erste Kupplungsbereich (38).

8. Hybrid-Antriebssystem nach Anspruch 5 oder Anspruch 6,
**dadurch gekennzeichnet, dass** der zweite Kupplungsbereich (36) der ersten Reibungskupplungsanordnung (22) wenigstens bereichsweise radial innerhalb und sich axial überlappend mit der Zwischenabstützanordnung (58) angeordnet ist.

9. Hybrid-Antriebssystem nach einem der Ansprüche 5 oder 8,
**dadurch gekennzeichnet, dass** der zweite Kupplungsbereich (36) der ersten Reibungskupplungsanordnung (22) von der Brennkraftmaschine (12) weiter entfernt liegt, als der erste Kupplungsbereich (38).

10. Hybrid-Antriebssystem nach einem der Ansprüche 5 bis 9,
**dadurch gekennzeichnet, dass** die Kupplungsscheibenanordnung (40, 42) der ersten Reibungskupplungsanordnung (22) eine zweite Torsionsschwingungsdämpferanordnung oder/und eine zweite axialelastische oder/und radialelastische Kopplungseinheit umfasst.

11. Hybrid-Antriebssystem nach Anspruch 5 und Anspruch 10,
**dadurch gekennzeichnet, dass** die zweite Torsionsschwingungsdämpferanordnung wenigstens bereichsweise radial innerhalb und sich axial überlappend mit dem ersten Kupplungsbereich (38) angeordnet ist.

12. Hybrid-Antriebssystem nach Anspruch 5 oder einem der Ansprüche 6 bis 11, sofern auf Anspruch 5 rückbezogen,
**dadurch gekennzeichnet, dass** die Betätigungsanordnung (62) wenigstens bereichsweise radial innerhalb und sich axial überlappend mit dem ersten Kupplungsbereich (38) angeordnet ist.

13. Hybrid-Antriebssystem nach einem der Ansprüche 1 bis 12,
**dadurch gekennzeichnet, dass** die Zwischenabstützanordnung (58) in einem radial inneren Bereich radial innerhalb der Elektromaschine (16) und sich mit dieser axial überlappend angeordnet ist.

14. Hybrid-Antriebssystem nach einem der Ansprüche 1 bis 13,
**dadurch gekennzeichnet, dass** die Anfahrbaugruppe (54) eine zweite Reibungskupplungsanordnung (70) umfasst.

15. Hybrid-Antriebssystem nach Anspruch 14,
**dadurch gekennzeichnet, dass** die zweite Reibungskupplungsanordnung (70) eine Mehrscheibenkupplung umfasst mit einem ersten Kupplungsbereich (74) mit einer Kupplungsscheibe mit größerer Außenabmessung und einem zweiten Kupplungsbereich (72) mit einer Kupplungsscheibe mit kleinerer Außenabmessung.

16. Hybrid-Antriebssystem nach Anspruch 15,
**dadurch gekennzeichnet, dass** der zweite Kupplungsbereich (72) der zweiten Reibungskupplungsanordnung (70) wenigstens bereichsweise radial innerhalb und sich axial überlappend mit der Elektromaschine (16) angeordnet ist.

17. Hybrid-Antriebssystem nach Anspruch 5 oder einem der Ansprüche 6 bis 16, sofern auf Anspruch 5 rückbezogen,
**dadurch gekennzeichnet, dass** eine sich näherungsweise quer zur Drehachse erstreckende Radantriebswelle (76) sich wenigstens bereichsweise axial überlappend mit dem zweiten Kupplungsbereich (36) oder/und sich wenigstens bereichsweise radial überlappend mit dem ersten Kupplungsbereich (38) der ersten Reibungskupplungsanordnung (22) angeordnet ist.

18. Antriebssystem für ein Fahrzeug, umfassend:
- ein Antriebsaggregat,
- eine Reibungskupplungsanordnung (22), axial folgend auf das Antriebsaggregat, wobei ein Eingangsbereich der Reibungskupplungsanordnung (22) mit einer Antriebswelle (14) des Antriebsaggregats über eine Kopplungsanordnung (24) zur gemeinsamen Drehung um eine Drehachse (A) verbunden ist, wobei die Reibungskupplungsanordnung (22) eine Mehrscheibenkupplung umfasst mit einem ersten Kupplungsbereich (38) mit einer Kupplungsscheibe mit größerer Außenabmessung und einem zweiten Kupplungsbereich (36) mit einer Kupplungsscheibe mit kleinerer Außenabmessung, wobei eine sich näherungsweise quer zur Drehachse (A) erstreckende Radantriebswelle (76) sich wenigstens bereichsweise axial überlappend mit dem zweiten Kupplungsbereich (36) und sich wenigstens bereichsweise radial überlappend mit dem ersten Kupplungsbereich (38) angeordnet ist.

19. Antriebssystem nach Anspruch 18,
**dadurch gekennzeichnet, dass** die Kopplungsanordnung (24) eine Torsionsschwingungsdämpferanordnung (26) mit einer Dämpferelementenanordnung (24) umfasst, welche sich wenigstens bereichsweise radial mit der Radantriebswelle (76) überlappt.
